# EUROPÄISCHE PATENTSCHRIFT

(11) **EP 2 329 991 B1**
(45) Veröffentlichungstag und Bekanntmachung des Hinweises auf die Patenterteilung: **22.10.2014**
(21) Anmeldenummer: 10191252.5
(22) Anmeldetag: 15.11.2010
(51) Int. Cl.: B60R 5/04

(54) **Schutzvorrichtung für einen Fahrzeuginnenraum**
Safety device for a vehicle interior
Dispositif de protection pour un habitacle de véhicule

(30) Priorität: 03.12.2009 DE 102009058293
(43) Veröffentlichungstag der Anmeldung: 08.06.2011
(73) Patentinhaber: BOS GmbH & Co. KG, 73760 Ostfildern (DE)
(72) Erfinder: Hintennach, Markus, 73262, Reichenbach (DE); Schleef, Thomas, 32457, Porta Westfalica (DE)
(74) Vertreter: Patentanwälte Ruff, Wilhelm, Beier, Dauster & Partner

(56) Entgegenhaltungen:
- EP-A1- 2 072 327
- DE-B3-102009 036 606

## Beschreibung

Die Erfindung betrifft eine Schutzvorrichtung für einen Fahrzeuginnenraum mit einem zwischen einer kompakt abgelegten Ruheposition und wenigstens einer zumindest teilweise ausgezogenen Funktionsposition beweglich gelagerten Flächengebilde, das an seinem in Auszugrichtung vorderen Stirnende mit einem flächigen und formstabilen Konturteil versehen ist, das sich im Wesentlichen über eine gesamte Breite des Flächengebildes erstreckt.

Eine Schutzvorrichtung in Form einer Laderaumabdeckung ist aus der DE 196 37 072 C1 bekannt. Die bekannte Laderaumabdeckung weist ein auf einer Wickelwelle auf- und abwickelbar gelagertes Flächengebilde auf, das an seinem in Auszugrichtung vorderen Stirnende mit einem formstabilen Konturteil versehen ist. Dem Konturteil ist eine Stützarmanordnung zugeordnet, die eine Verlängerung für das Konturteil darstellt. Mittels der Stützarmanordnung, die relativ zum Konturteil in Aufwickelrichtung nach vorne abragt, kann das Konturteil in fahrzeugseitigen Halterungen in der ausgezogenen Endposition fixiert werden, wobei das Konturteil innerhalb des Laderaumes aufgrund der Verlängerung zwangsläufig weiter in einen Heckbereich nach hinten verlagert ist. Die Stützarmanordnung ist starr an dem Konturteil angeordnet und verbleibt an dem Konturteil auch in eingezogener, d.h. aufgewickelter Ruheposition des Flächengebildes.

Aufgabe der Erfindung ist es, eine Schutzvorrichtung der eingangs genannten Art zu schaffen, die ohne fixe Stützarmanordnung eine zusätzliche Verlagerung des Konturteils kurz vor Erreichen der ausgezogenen Endposition ermöglicht.

Diese Aufgabe wird dadurch gelöst, dass einem Bewegungsendbereich des Konturteiles kurz vor Erreichen der ausgezogenen Endposition Steuermittel zugeordnet sind, die das Konturteil um einen zusätzlichen Auszugweg in Auszugrichtung nach vorne verlagern. Die erfindungsgemäße Lösung eignet sich sowohl für Schutzvorrichtungen in Form von horizontal ausziehbaren Laderaumabdeckungen also auch für Trennvorrichtungen zwischen Laderaum und Fahrgastraum sowie für Schutzvorrichtungen, die zur Beschattung von transparenten Dachflächenbereichen, von Seitenscheiben oder von Heckscheiben eines Kraftfahrzeugs geeignet sind. Die erfindungsgemäßen Steuermittel wirken auf das Konturteil kurz vor Erreichen der ausgezogenen Endposition des Konturteiles, um es über den zusätzlichen Auszugweg zu verlagern. Das flexible Flächengebilde ist derart bemessen, dass es dem zusätzlichen Auszugweg des Konturteiles folgen kann. Die Steuermittel sind fahrzeugseitig vorgesehen und überführen das Konturteil über die Länge des zusätzlichen Auszugweges bis in die vollständig ausgezogene Endposition. Durch die erfindungsgemäße Lösung ist es möglich, das Konturteil gegenüber bekannten Konturteilen, die keinen zusätzlichen Auszugweg vollführen, zu verkürzen. Dadurch weist das Konturteil ein geringes Gewicht auf. Das Konturteil dient dazu, einen zwischen dem benachbarten Stirnrand des Flächengebildes in ausgezogener Funktionsposition und einer Fahrzeuginnenraumbegrenzungsfläche verbleibenden Raum zu überdecken. Bei eine horizontalen Laderaumabdeckung dient das Konturteil dazu, einen Freiraum in einem Heckbereich des Laderaumes bis hin zu einer Innenkontur einer Heckklappe zu überbrücken.

In Ausgestaltung der Erfindung umfassen die Steuermittel eine mechanisch auf das Konturteil wirkende Steuerkinematik, die das Konturteil in die Endposition überführen. Die Steuerkinematik ist fahrzeugseitig vorgesehen. Falls die Schutzvorrichtung als horizontal ausziehbare Laderaumabdeckung gestaltet ist, ist die Steuerkinematik auf gegenüberliegende Fahrzeugseiten verteilt, um das Konturteil von gegenüberliegenden Seiten her synchronisiert und parallel führen zu können.

In weiterer Ausgestaltung der Erfindung ist die Steuerkinematik derart gestaltet, dass das Konturteil durch eine Schwenk- oder Kurvenbewegung in die Endposition überführt wird. Vorzugsweise verläuft die Schwenk- oder Kurvenbewegung von der normalen Auszugrichtung weg schräg nach oben oder nach unten, um eine gewünschte Verlagerung des Konturteiles zu erzielen. Die Steuerkinematik ist lediglich in einem Endbereich einer Auszugbewegung des Flächengebildes und des Konturteiles vorgesehen. Die Steuerkinematik kann sich an seitliche Führungsschienen anschließen, die auf gegenüberliegenden Seiten die Auszugbewegung des Flächengebildes und des Konturteiles aus seiner Ruheposition heraus flankieren und fahrzeugseitig angeordnet sind. Alternativ kann die Steuerkinematik in dem genannten Endbereich vorgesehen sein, ohne dass der Auszugweg oder Rückholweg des Flächengebildes und des Konturteiles zwischen der Ruheposition und der nahezu ausgezogenen Endposition durch seitliche Führungen flankiert ist. Das Flächengebilde und das Konturteil können bei dieser Variante entweder manuell von Hand ausgezogen und anschließend an die Steuerkinematik übergeben werden, oder es ist eine Schwenkhebelkinematik vorgesehen, die analog einer bekannten Schwenkhebelkinematik bei einem Heckscheibenrollo das Konturteil auszieht und kurz vor Erreichen der Endposition an die Steuerkinematik übergibt. Selbstverständlich wird die Schwenkhebelkinematik dann von dem Konturteil gelöst.

In weiterer Ausgestaltung der Erfindung ist das Konturteil über seinen gesamten Auszugweg über fahrzeugseitige Führungsmittel geführt, denen im Endbereich des Auszugweges die Steuerkinematik zugeordnet ist. In vorteilhafter Weise ist das Konturteil im Bereich seiner gegenüberliegenden Stirnenden an jeweils einem Schlitten gehalten, der jeweils in einer fahrzeugseitigen Führungsschienenanordnung verfahrbar gelagert ist. Die Führungsschienenanordnungen und die in den Führungsschienenanordnungen gelagerten Schlitten stellen Führungsmittel im Sinne der Erfindung dar.

In weiterer Ausgestaltung der Erfindung ist einem Endbereich der Führungsschienenanordnung eine Steuerkulisse zugeordnet, die relativ zur Führungsschienenanordnung derart geneigt ist, dass das Konturteil bei Erreichen der Steuerkulisse in Auszugrichtung nach vorne verkippt wird. Die Steuerkulisse setzt die Führungsschienenanordnung fort, so dass der Schlitten aus der Führungsschienenanordnung in die Steuerkulisse überführt wird, sobald das Konturteil und das Flächengebilde einen entsprechenden Auszugweg überfahren haben.

In weiterer Ausgestaltung der Erfindung ist das Konturteil mittels eines Schwenkarmes an jeweils einem Schlitten gehalten, wobei der Schwenkarm um eine quer zur Auszugrichtung erstreckte Schwenkachse an dem Schlitten schwenkbeweglich gelagert ist, und auf Höhe des Endbereiches der Führungsschienenanordnung ist eine Zwangsführung vorgesehen, die den Schwenkarm bei Erreichung des Endbereiches durch den Schlitten in eine in Auszugrichtung nach vorne verlagerte Schwenklage überführt. Statt einer Kulissenführung, in die der Schlitten nach Durchlaufen der Führungsschienenanordnung eintaucht, ist bei dieser Ausgestaltung das Konturteil an dem Schlitten auf jeder Seite mittels eines Schwenkarmes aufgenommen. Jeder Schwenkarm wird am jeweiligen Schlitten in einer aufrechten Position gehalten, solange das Konturteil aus der Ruheposition über den normalen Auszugweg bis hin zu einer weitgehend ausgezogenen Funktionsposition verlagert wird. Erst wenn der Schwenkarm die fahrzeugfest angeordnete Zwangsführung erreicht, wird er in Auszugrichtung nach vorne verschwenkt, wodurch auch das an den beiden Schwenkarmen gehaltene Konturteil in Auszugrichtung nach vorne verschwenkt wird. Vorzugsweise ragen gegenüberliegende Seitenränder des Flächengebildes frei zu entsprechenden Begrenzungsflächen des Fahrzeuginnenraumes ab, so dass die Seitenränder des Flächengebildes bei einer Schwenkbewegung des Schwenkarmes und des Konturteiles nicht zur Auflage oder zur Kollision mit entsprechenden Innenraumbegrenzungsflächen kommen.

In weiterer Ausgestaltung der Erfindung ist das Konturteil mit seinen gegenüberliegenden Stirnendbereichen in korrespondierenden Aufnahmen jedes Schlittens derart formschlüssig aufgenommen, dass das Konturteil drehfest in den Aufnahmen positioniert ist. Bei einer Verlagerung der Aufnahme jedes Schlittens bleibt die Ausrichtung des Konturteiles relativ zu diesen Aufnahmen somit zwangsläufig im gleichen Winkel beibehalten.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig.1: zeigt schematisch in perspektivischer Darstellung eine Ausführungsform einer erfindungsgemäßen Schutzvorrichtung für einen Fahrzeuginnenraum eines Kombi-Personenkraftwagens,
- Fig. 2: in vergrößerter, stark schematisierter Seitenansicht die Ausführungsform nach Fig. 1 mit einem Konturteil in einer ersten Funktionslage,
- Fig. 3: die Ausführungsform nach Fig. 2 mit dem Konturteil in einer ausgezogenen Endposition,
- Fig. 4: eine weitere Ausführungsform einer erfindungsgemäßen Schutzvorrichtung in stark schematisierter Seitenansicht, wobei das Konturteil sich in seiner ausgezogenen Endposition befindet und
- Fig. 5: die Ausführungsform nach Fig. 4, bei der das Konturteil sich nahezu in der eingezogenen Ruheposition befindet.

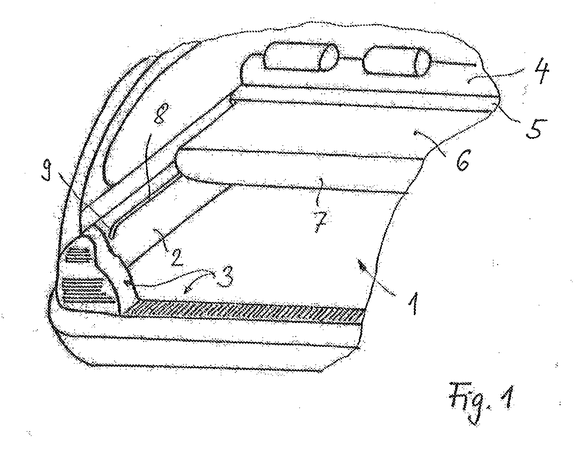

Ein Kraftfahrzeug in Form eines Kombi-Personenkraftwagens weist gemäß Fig. 1 einen Laderaum 1 auf, der an den gegenüberliegenden Fahrzeugseiten durch zwei Laderaumseitenwandungen 2 begrenzt ist. Zu einem Fahrzeugheck hin endet der Laderaum 1 an einem Heckbereich 3 mit einer Heckklappenöffnung, die durch eine nicht dargestellte Heckklappe verschließbar ist. Der Laderaum 1 ist in Fahrtrichtung nach vorne durch eine Rückenlehnenanordnung 4 einer Fondsitzbank begrenzt. Unmittelbar hinter der Rückenlehnenanordnung 4 ist eine Laderaumabdeckung 5 bis 7 positioniert. Die Laderaumabdeckung 5 bis 7 weist ein Kassettengehäuse 5 auf, das sich parallel zur Rückenlehnenanordnung 4 über die Breite des Laderaumes 1 erstreckt und an seinen gegenüberliegenden Stirnendbereichen fahrzeugfest an den Laderaumseitenwandungen 2 gehalten ist. In dem Kassettengehäuse 5 ist eine Wickelwelle 10 drehbar gelagert, auf der ein flexibles Flächengebilde 6, vorliegend in Form einer Abdeckplane, auf- und abwickelbar gehalten ist. An einem in Auszugrichtung vorderen Stirnendbereich des flexiblen Flächengebildes 6 ist ein formstabiles Konturteil 7 befestigt, das in ausgezogenem Funktionszustand des flexiblen Flächengebildes 6 einen im Heckbereich 3 verbleibenden Freiraum zwischen einer Stirnkante des flexiblen Flächengebildes 6 und einer Innenkontur der Heckklappe überdeckt.

Das Konturteil 7 und das flexible Flächengebilde 6 werden über ihre gesamte Ausziehbewegung und Rückholbewegung durch Führungsmittel 8, 9, 11 geführt. Das Konturteil 7 weist im Bereich seiner gegenüberliegenden Seitenendbereiche jeweils einen Halteabschnitt 13 auf, der im Querschnitt mehreckig, vorzugsweise viereckig, gestaltet ist. Jeder Halteabschnitt 13 ist in einem U-förmigen Aufnahmeträger 12 eines Führungsschlittens 11 gehalten. Der Führungsschlitten 11 ist in einer Führungsschienenanordnung 8, die im Bereich jeder Laderaumseitenwandung fahrzeugfest angeordnet ist, rollbeweglich gelagert. Die Führungsschienenanordnung 8 ist im Abstand unterhalb einer Ausziehebene des flexiblen Flächengebildes 6 angeordnet. Der Führungsschlitten 11 weist einen nicht näher bezeichneten Trägerfuß auf, auf dem der jeweilige Aufnahmeträger 12 befestigt ist. Im Bereich der gegenüberliegenden Laderaumseitenwandungen 2 sind jeweils identische Führungsschienenanordnungen 8 und Führungsschlitten 11 vorgesehen, die spiegelsymmetrisch zu einer vertikalen Fahrzeugmittellängsebene ausgeführt sind. Das Konturteil 7 wird somit mit seinen beiden gegenüberliegenden Seitenendbereichen und den entsprechenden Halteabschnitten 13 in die gegenüberliegenden Aufnahmeträger 12 der gegenüberliegenden Führungsschlitten 11 eingesetzt. Die U-förmige Aufnahme des Aufnahmeträgers 12 und das Querschnittsprofil jedes Halteabschnittes 13 sind formschlüssig aufeinander abgestimmt, so dass die Halteabschnitte 13 in den zugehörigen Aufnahmeträgern 12 relativ zu einer horizontalen Querachse im Verbindungsbereich zwischen flexiblem Flächengebilde 6 und Konturteil 7 drehfest ineinander greifen.

In einem zum Heckbereich 3 des Kraftfahrzeugs gewandten Endbereich geht die Führungsschienenanordnung 8 in eine schräg nach unten abfallende Steuerkulisse 9 über, die sich fluchtend zu der Führungsschienenanordnung fortsetzt. Diese Steuerkulisse 9 weist den gleichen freien Querschnitt auf wie die zugehörige Führungsschienenanordnung 8, so dass der Führungsschlitten 11 in die Steuerkulisse 9 hinein bis zu ihrem nicht näher bezeichneten Endanschlag verfahren werden kann. Da die gegenüberliegenden Steuerkulissen 9 relativ zur horizontalen Führungsschienenanordnung 8 um einen Winkel zwischen vorzugsweise 10° und 45° geneigt sind, bewegt sich der Führungsschlitten 11 beim Übergang von der Führungsschienenanordnung 8 in die schräge Steuerkulisse 9 schräg nach hinten und nach unten, so dass jeder Aufnahmeträger 12 des Führungsschlittens 11 zum Heckbereich 3 nach hinten verkippt wird. Hierdurch wird das Konturteil 7 um den überstrichenen Winkelbetrag zum Heckbereich 3 nach hinten verlagert, wobei gleichzeitig auch das flexible Flächengebilde 6 um den zusätzlichen Auszugweg weiter nach hinten ausgezogen wird. Das Verkippen des Konturteiles 7 zum Heckbereich 3 nach hinten ermöglicht somit einen zusätzlichen Auszugweg des Flächengebildes 6, so dass die in Fahrzeuglängsrichtung erstreckte Abmessung des Konturteiles 7 kürzer gehalten werden kann als dies bei einem Konturteil der Fall wäre, das nicht schräg nach hinten verkippt wird.

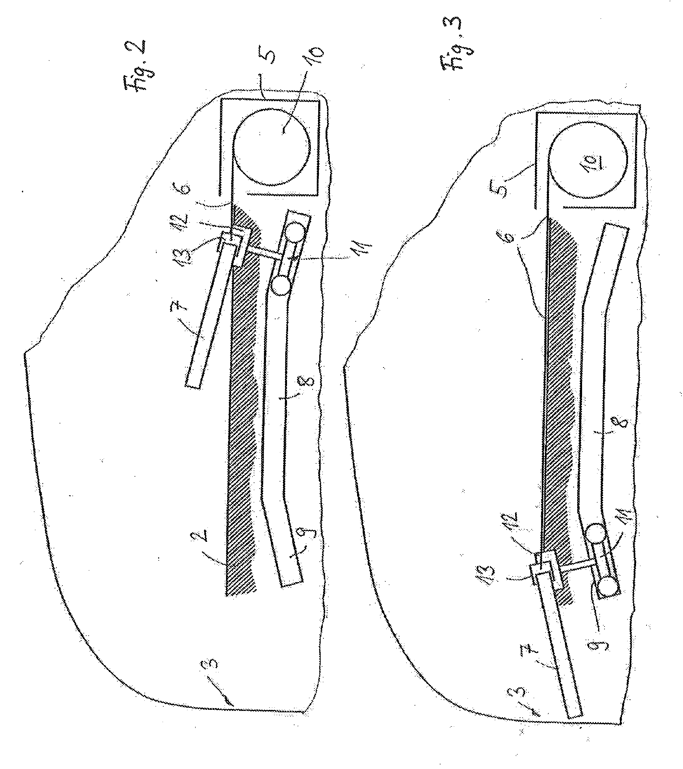

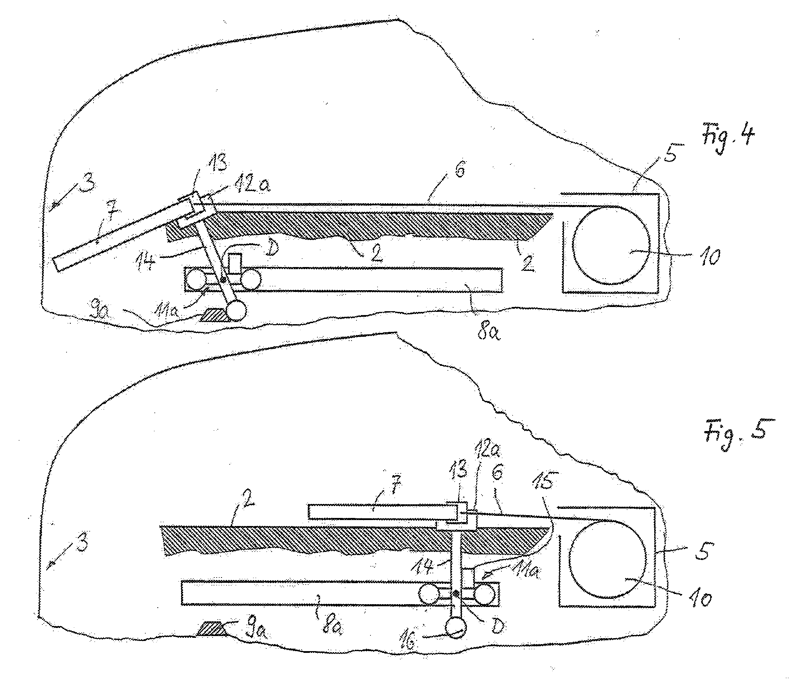

Die gleiche Funktion ergibt sich bei der Ausführungsform nach den Fig. 4 und 5. Funktionsgleiche Bauteile und Abschnitte sind mit identischen Bezugszeichen, teilweise unter Hinzufügung des Buchstabens a versehen. Wesentlicher Unterschied bei der Ausführungsform nach den Fig. 4 und 5 ist es, dass die Verkippung des Konturteiles 7 kurz vor Erreichen der ausgezogenen Endposition nicht durch eine Steuerkulisse 9, sondern vielmehr durch einen Schwenkarm 14 erfolgt, der um eine Drehachse D schwenkbeweglich an dem Führungsschlitten 11a gehalten ist. Die Führungsschienenanordnung 8a selbst ist ausschließlich horizontal gestaltet. Soweit nachfolgend die Ausführungsform nach den Fig. 4 und 5 nicht ausführlich beschrieben ist, wird Bezug genommen auf die Beschreibung der funktionsgleichen Teile und Abschnitte der Ausführungsform nach den Fig. 2 und 3.

Die Führungsschienenanordnung 8a erstreckt sich horizontal in Abstand unterhalb einer Auszugebene des flexiblen Flächengebildes 6, wobei jede Führungsschienenanordnung 8a in der entsprechenden Laderaumseitenwandung 2 integriert ist. Die Halteabschnitte 13 des Konturteiles 7 sind formschlüssig und drehfest in jeweils einem Aufnahmeträger 12a des Führungsschlittens 11a aufgenommen. Jeder Aufnahmeträger 12a ist jedoch bei dieser Ausführungsform mittels des Schwenkarmes 14 an dem Führungsschlitten 11a gehalten. Ein Stützanschlag 15 hält den Schwenkarm 14 gemeinsam mit einer nicht dargestellten Federanordnung in einer relativ zur horizontalen Führungsschienenanordnung 8a vertikalen, aufrechten Ausrichtung. Bei einer nicht dargestellten Ausführungsform der Erfindung ist der Stützanschlag 15 als Magnet ausgeführt, an dem der magnetisierbar ausgeführte Schwenkarm 14 bei einer Auszieh- oder Einholbewegung des Konturteiles 7 gehalten ist.

Der Schwenkarm 14 weist einen über die Drehachse D nach unten abragenden Auslegerabschnitt 16 auf, der kurz vor Erreichen der ausgezogenen Endposition des Konturteiles 7 und des Flächengebildes 6 an einem fahrzeugfesten Zwangsführungsanschlag 9a zur Anlage kommt. Bei einer weiteren Verschiebebewegung des Führungsschlittens 11a bis zum heckseitigen Endbereich der Führungsschienenanordnung 8a schlägt der Auslegerabschnitt 16 somit an dem Zwangsführungsanschlag 9a an und verschwenkt zwangsläufig den Schwenkarm 14 schräg nach hinten. Dadurch kommt es zu der gewünschten Verkippung des Konturteiles 7 zum Heckbereich 13 nach hinten. Bei einer Rückholbewegung aus dieser ausgezogenen Endposition des Konturteiles 7 wirkt eine durch einen Federmotor bewirkte Rückholkraft der Wickelwelle 10 auf das flexible Flächengebilde 6, wodurch auch das Konturteil 7 zurückgezogen wird. Sobald das Konturteil 7 den Führungsschlitten 11a so weit mitgenommen hat, dass der Auslegerabschnitt 16 sich von dem Zwangsführungsanschlag 9a entfernt, schwenkt der Schwenkarm 14 wieder in seine aufrechte Ausgangslage zurück, so dass er in Richtung des Kassettengehäuses 5 nach vorne bewegt wird.

Beide Ausführungsformen nach den Fig. 2 bis 5 können manuell zum Heckbereich 3 hin ausgezogen werden. Alternativ ist es möglich, dem Führungsschlitten 11, 11a eine Antriebseinheit zuzuordnen, die eine Ausziehbewegung und/oder eine Rückholbewegung des Flächengebildes 6 vornimmt. Die Antriebseinheit kann elektrisch, hydraulisch, pneumatisch oder mechanisch ausgeführt oder unterstützt sein.

## Patentansprüche

1. Schutzvorrichtung für einen Fahrzeuginnenraum mit einem zwischen einer kompakt abgelegten Ruheposition und wenigstens einer zumindest teilweise ausgezogenen Funktionsposition beweglich gelagerten, flexiblen Flächengebilde, das an seinem in Auszugrichtung vorderen Stirnende mit einem flächigen und formstabilen Konturteil versehen ist, das sich im Wesentlichen über eine gesamte Breite des Flächengebildes erstreckt,
**dadurch gekennzeichnet, dass**
einem Bewegungsendbereich des Konturteiles (7) kurz vor Erreichen der ausgezogenen Endposition Steuermittel (9, 9a) zugeordnet sind, die das Konturteil (7) um einen zusätzlichen Auszugweg in Auszugrichtung nach vorne verlagern.

2. Schutzvorrichtung nach Anspruch 1, **dadurch gekennzeichnet, dass** die Steuermittel eine mechanisch auf das Konturteil (7) wirkende Steuerkinematik (9, 9a, 14a) umfassen, die das Konturteil (7) in die Endposition überführt.

3. Schutzvorrichtung nach Anspruch 2, **dadurch gekennzeichnet, dass** die Steuerkinematik derart gestaltet ist, dass das Konturteil (7) durch eine Schwenk- oder Kurvenbewegung in die Endposition überführt wird.

4. Schutzvorrichtung nach wenigstens einem der vorhergehenden Ansprüche, **dadurch gekennzeichnet, dass** das Konturteil (7) über seinen gesamten Auszugweg über fahrzeugseitige Führungsmittel (8, 8a) geführt ist, denen im Endbereich des Auszugweges die Steuerkinematik (9, 9a) zugeordnet ist.

5. Schutzvorrichtung nach Anspruch 4, **dadurch gekennzeichnet, dass** das Konturteil (7) im Bereich seiner gegenüberliegenden Stirnenden an jeweils einem Schlitten (11, 11a) gehalten ist, der jeweils in einer fahrzeugseitigen Führungsschienenanordnung (8, 8a) verfahrbar gelagert ist.

6. Schutzvorrichtung nach Anspruch 5, **dadurch gekennzeichnet, dass** einem Endbereich der Führungsschienenanordnung (8) eine Steuerkulisse (9) zugeordnet ist, die relativ zur Führungsschienenanordnung (8) derart geneigt ist, dass das Konturteil (7) bei Erreichen der Steuerkulisse (9) in Auszugrichtung nach vorne verkippt wird.

7. Schutzvorrichtung nach Anspruch 5, **dadurch gekennzeichnet, dass** das Konturteil (7) mittels eines Schwenkarmes (14) an jeweils einem Schlitten (11a) gehalten ist, wobei der Schwenkarm (14) um eine quer zur Auszugrichtung erstreckte Schwenkachse (D) an dem Schlitten (11a) schwenkbeweglich gelagert ist, und dass auf Höhe des Endbereiches der Führungsschienenanordnung (8a) eine Zwangsführung (9a) vorgesehen ist, die den Schwenkarm (14) bei Erreichen des Endbereiches durch den Schlitten (11a) in eine in Auszugrichtung nach vorne verlagerte Schwenklage überführt.

8. Schutzvorrichtung nach wenigstens einem der vorhergehenden Ansprüche, **dadurch gekennzeichnet, dass** das Konturteil (7) mit seinen gegenüberliegenden Stirnendbereichen (13) in korrespondierenden Aufnahmen (12, 12a) jedes Schlittens (11, 11a) derart formschlüssig aufgenommen ist, dass das Konturteil (7) drehfest in den Aufnahmen (12, 12a) positioniert ist.

## Claims

1. Protection device for a vehicle interior, with a flexible sheetlike structure which is mounted movably between a compactly stored inoperative position and at least one at least partially extended functional position and is provided at the end thereof which is in front in the extension direction with a planar and dimensionally stable contour part which extends substantially over an entire width of the sheetlike structure, **characterized in that** control means (9, 9a) are assigned to a movement end region of the contour part (7) shortly before the extended end position is reached, said control means shifting the contour part (7) forwards in the extension direction by an additional extension distance.

2. Protection device according to Claim 1, **characterized in that** the control means comprise control kinematics (9, 9a, 14a) acting mechanically on the contour part (7) and transferring the contour part (7) into the end position.

3. Protection device according to Claim 2, **characterized in that** the control kinematics is configured in such a manner that the contour part (7) is transferred into the end position by a pivoting or curved movement.

4. Protection device according to at least one of the preceding Claims, **characterized in that** the contour part (7) is guided over the entire extension distance thereof via guide means (8, 8a) which are on the vehicle and which are assigned the control kinematics (9, 9a) in the end region of the extension distance.

5. Protection device according to Claim 4, **characterized in that** the contour part (7) is held in the region of the opposite ends thereof on a respective slide (11, 11a) which is mounted movably in each case in a guide rail arrangement (8, 8a) on the vehicle.

6. Protection device according to Claim 5, **characterized in that** an end region of the guide rail arrangement (8) is assigned a control slot (9) which is inclined relative to the guide rail arrangement (8) in such a manner that the contour part (7) is tilted forward in the extension direction upon reaching the control slot (9).

7. Protection device according to Claim 5, **characterized in that** the contour part (7) is held on a respective slide (11a) by means of a pivoting arm (14), the pivoting arm (14) being mounted pivotably on the slide (11 a) about a pivot axis (D) extended transversely with respect to the extension direction, and **in that** a restraint (9a) is provided level with the end region of the guide rail arrangement (8a), said restraint transferring the pivoting arm (14) when the slide (11a) reaches the end region into a pivoted position which is shifted forwards in the extension direction.

8. Protection device according to at least one of the preceding claims, **characterized in that** the contour part (7) is accommodated by the opposite end regions (13) thereof in corresponding receptacles (12, 12a) of each slide (11, 11 a) in a form-fitting manner such that the contour part (7) is positioned in a rotationally fixed manner in the receptacles (12, 12a).

## Revendications

1. Dispositif de protection pour un habitacle de véhicule, comprenant une structure plane flexible supportée de manière déplaçable entre une position de repos rangée de manière compacte et au moins une position fonctionnelle au moins partiellement sortie, qui est pourvue à son extrémité frontale avant dans la direction de sortie d'une partie profilée plane et de forme stable, qui s'étend essentiellement sur une largeur totale de la structure plane,
**caractérisé en ce que**
des moyens de commande (9, 9a) sont associés à une région d'extrémité de déplacement de la partie profilée (7) juste avant d'atteindre la position d'extrémité sortie, lesquels moyens de commande déplacent la partie profilée (7) vers l'avant dans la direction sortie sur une course de sortie supplémentaire.

2. Dispositif de protection selon la revendication 1, **caractérisé en ce que** les moyens de commande comprennent une cinématique de commande (9, 9a, 14a) agissant par voie mécanique sur la partie profilée (7), laquelle transfère la partie profilée (7) dans la position d'extrémité.

3. Dispositif de protection selon la revendication 2, **caractérisé en ce que** la cinématique de commande est configurée de telle sorte que la partie profilée (7) soit transférée dans la position d'extrémité par un mouvement de pivotement ou curviligne.

4. Dispositif de protection selon au moins l'une quelconque des revendications précédentes, **caractérisé en ce que** la partie profilée (7) est guidée sur toute sa course de sortie par le biais de moyens de guidage (8, 8a) du côté du véhicule, auxquels est associée la cinématique de commande (9, 9a) dans la région d'extrémité de la course de sortie.

5. Dispositif de protection selon la revendication 4, **caractérisé en ce que** la partie profilée (7) est retenue dans la région de ses extrémités frontales opposées au niveau d'un chariot respectif (11, 11a) qui est supporté de manière déplaçable à chaque fois dans un agencement de rail de guidage (8, 8a) du côté du véhicule.

6. Dispositif de protection selon la revendication 5, **caractérisé en ce qu'**une coulisse de commande (9) est associée à une région d'extrémité de l'agencement de rail de guidage (8), laquelle coulisse de commande est inclinée par rapport à l'agencement de rail de guidage (8) de telle sorte que la partie profilée (7), une fois qu'elle a atteint la coulisse de commande (9), soit basculée vers l'avant dans la direction de sortie.

7. Dispositif de protection selon la revendication 5, **caractérisé en ce que** la partie profilée (7) est retenue au moyen d'un bras pivotant (14) au niveau d'un chariot respectif (11a), le bras pivotant (14) étant supporté au niveau du chariot (11a) de manière à pouvoir pivoter autour d'un axe de pivotement (D) s'étendant transversalement à la direction de sortie, et **en ce qu'**un guidage forcé (9a) est prévu à la hauteur de la région d'extrémité de l'agencement de rail de guidage (8a), lequel guidage forcé transfère le bras pivotant (14), une fois la région d'extrémité atteinte par le chariot (11a), dans une position de pivotement décalée vers l'avant dans la direction de sortie.

8. Dispositif de protection selon au moins l'une quelconque des revendications précédentes, **caractérisé en ce que** la partie profilée (7) est reçue par engagement par correspondance de formes avec ses régions d'extrémités frontales opposées (13) dans des logements correspondants (12, 12a) de chaque chariot (11, 11a) de telle sorte que la partie profilée (7) soit positionnée de manière solidaire en rotation dans les logements (12, 12a).
